# DEMANDE DE BREVET EUROPEEN

(11) **EP 0 627 811 A1**
(43) Date de publication de la demande: **07.12.1994**
(21) Numéro de dépôt: 94107837.0
(22) Date de dépôt: 20.05.1994
(51) Int. Cl.: H02P 9/48

(54) **Groupe électrogène**

(30) Priorité: 02.06.1993 FR 9306691
(71) Demandeur: SMH Management Services AG, CH-2501 Biel (CH)
(72) Inventeur: Jeanneret, René, CH-3274 Merzligen (CH)
(74) Mandataire: de Montmollin, Henri

(57) **Abrégé**

Le groupe électrogène (1) comporte un moteur (3) couplé à un générateur (5) produisant une tension alternative (V2), un premier convertisseur (6) produisant une tension continue (V3) à partir de cette tension alternative (V2), une source d'énergie électrique rechargeable (7) produisant une tension continue (V4) égale à la tension (V3) et branchée en parallèle avec le premier convertisseur (6), et un deuxième convertisseur (9) produisant la tension alternative (V1) de sortie du groupe électrogène (1) à partir de cette tension continue (V3).

Cette disposition permet de maintenir constantes la valeur efficace (U1) et la fréquence (f1) de la tension de sortie (V1) quelles que soient les variations de la puissance électrique absorbée par le dispositif consommateur (2) alimenté par le groupe électrogène (1).

Application à l'alimentation en énergie électrique sous une tension alternative d'un dispositif consommateur quelconque.

## Description

La présente invention a pour objet un groupe électrogène destiné à fournir une énergie électrique sous une première tension, qui est une tension alternative ayant une valeur efficace et une fréquence déterminées, comportant un moteur et un générateur couplé mécaniquement audit moteur pour produire ladite énergie électrique.

Un tel groupe électrogène est évidemment destiné à alimenter en énergie électrique un dispositif consommateur quelconque qui sera simplement appelé "le dispositif consommateur" dans la suite de cette description.

La tension alternative de sortie d'un groupe électrogène connu, c'est-à-dire la tension qu'il fournit au dispositif consommateur, est directement constituée par la tension produite par le générateur de ce groupe électrogène.

La fréquence de cette tension de sortie doit bien entendu être aussi constante que possible quelle que soit la puissance électrique qui est absorbée par le dispositif consommateur et que le groupe électrogène doit fournir.

Le générateur d'un groupe électrogène connu doit donc, pratiquement, être un générateur de type synchrone, c'est-à-dire un générateur produisant une tension dont la fréquence est proportionnelle à la vitesse de rotation de son rotor, et cette vitesse de rotation doit être réglée à une valeur constante telle que cette fréquence ait la valeur voulue.

Ce rotor étant couplé mécaniquement à l'arbre de sortie du moteur du groupe électrogène, c'est évidemment la vitesse de rotation de ce moteur qui doit être réglée à une valeur constante.

Ainsi, par exemple, dans un groupe électrogène dont le générateur est bipolaire et si le rotor de ce dernier est directement couplé à l'arbre de sortie du moteur, la vitesse de rotation de ce dernier doit être réglée à 3'000 tours par minute pour que la fréquence de la tension de sortie de ce groupe électrogène soit de 50 Hz, et ceci quelle que soit la puissance électrique absorbée par le dispositif consommateur.

Il est bien connu qu'il est difficile de régler avec précision la vitesse de rotation d'un moteur, notamment d'un moteur à combustion interne tel que celui qui est généralement utilisé dans un groupe électrogène, lors de variations rapides de la puissance mécanique qu'il doit fournir.

Or, dans un groupe électrogène, cette puissance mécanique dépend évidemment de la puissance électrique absorbée par le dispositif consommateur, qui peut varier en un temps très court entre une valeur faible, voire même nulle, et une valeur élevée, voire même la valeur de la puissance maximale que peut fournir le groupe électrogène, ou inversement.

Lors de telles variations de cette puissance absorbée par le dispositif consommateur, la vitesse de rotation du moteur d'un groupe électrogène connu, et donc la fréquence de la tension de sortie de ce dernier, ne peuvent donc pratiquement pas être maintenues à la valeur constante désirée.

Les variations de la fréquence de la tension de sortie d'un groupe électrogène dues à ces variations de vitesse de son moteur peuvent être atténuées, mais non pas complètement éliminées, en disposant un volant d'inertie sur l'arbre qui relie ce moteur au générateur. Mais un tel volant a l'inconvénient d'être un élément lourd et encombrant.

La valeur efficace de la tension de sortie d'un groupe électrogène doit également rester constante quelle que soit la puissance électrique absorbée par le dispositif consommateur.

Pour pouvoir ajuster cette tension de sortie, on utilise généralement dans un groupe électrogène connu un générateur dont le rotor comporte des enroulements dits d'excitation, et on prévoit un circuit adéquat pour modifier le courant passant dans ces enroulements d'excitation en fonction de la puissance électrique absorbée par le dispositif consommateur.

Mais lors d'un changement rapide de cette puissance électrique, le courant passant dans les enroulements d'excitation ne varie que relativement lentement à cause, notamment, de l'inductivité de ces enroulements, ce qui provoque une variation de la valeur de la tension fournie par le générateur, et donc de la tension de sortie du groupe électrogène.

La tension fournie par le générateur dépendant en outre de la vitesse de rotation du rotor de ce dernier, la variation de cette tension lors d'un changement de la puissance absorbée par le dispositif utilisateur est encore aggravée par la variation de cette vitesse de rotation qui se produit à ce moment comme cela a été mentionné ci-dessus.

En résumé, on voit que ni la valeur ni la fréquence de la tension fournie par un groupe électrogène connu ne restent constantes lors d'un changement de la puissance électrique absorbée par le dispositif consommateur qu'il alimente.

Un but de la présente invention est donc de proposer un groupe électrogène qui ne présente pas ces inconvénients, c'est-à-dire un groupe électrogène fournissant une tension alternative ayant une valeur efficace et une fréquence constantes même lors de variations importantes et/ou rapides de la puissance électrique absorbée par le dispositif consommateur qu'il alimente.

Ce but est atteint par le groupe électrogène revendiqué, qui est destiné à fournir une énergie électrique sous une première tension, qui est une tension alternative ayant une valeur efficace et une fréquence déterminées, comportant un moteur et un générateur couplé mécaniquement audit moteur pour produire ladite énergie électrique, et qui est caractérisé par le fait que ledit générateur est agencé de manière à produire ladite énergie électrique sous une deuxième tension, et qu'il comporte un premier convertisseur couplé électriquement audit générateur pour convertir ladite deuxième tension en une troisième tension, qui est une tension continue ayant une valeur constante, une source d'énergie électrique rechargeable couplée en parallèle avec ledit premier convertisseur, et un deuxième convertisseur couplé électriquement audit premier convertisseur et à ladite source d'énergie électrique rechargeable pour produire ladite première tension à partir de ladite troisième tension.

D'autres buts et avantages de la présente invention seront rendus évidents par la description qui va être faite ci-après à l'aide du dessin annexé dans lequel :
- la figure 1 représente schématiquement et à titre d'exemple non limitatif une forme d'exécution du groupe électrogène selon l'invention;
- la figure 2 est un diagramme représentant la puissance mécanique fournie par un moteur en fonction de sa vitesse de rotation;
- la figure 3 est un tableau résumant le fonctionnement d'un circuit du groupe électrogène de la figure 1;
- la figure 4 représente la variation en fonction du temps de quelques signaux mesurés dans le groupe électrogène de la figure 1;
- la figure 5 représente schématiquement et également à titre d'exemple non limitatif une autre forme d'exécution du groupe électrogène selon l'invention;
- les figures 6, 7 et 8 représentent schématiquement diverses possibilités d'utilisation du groupe électrogène de la figure 5;
- la figure 9 représente schématiquement et toujours à titre d'exemple non limitatif une autre forme d'exécution du groupe électrogène selon la présente invention; et
- la figure 10 représente schématiquement une source d'énergie électrique rechargeable utilisable dans un groupe électrogène selon l'invention.

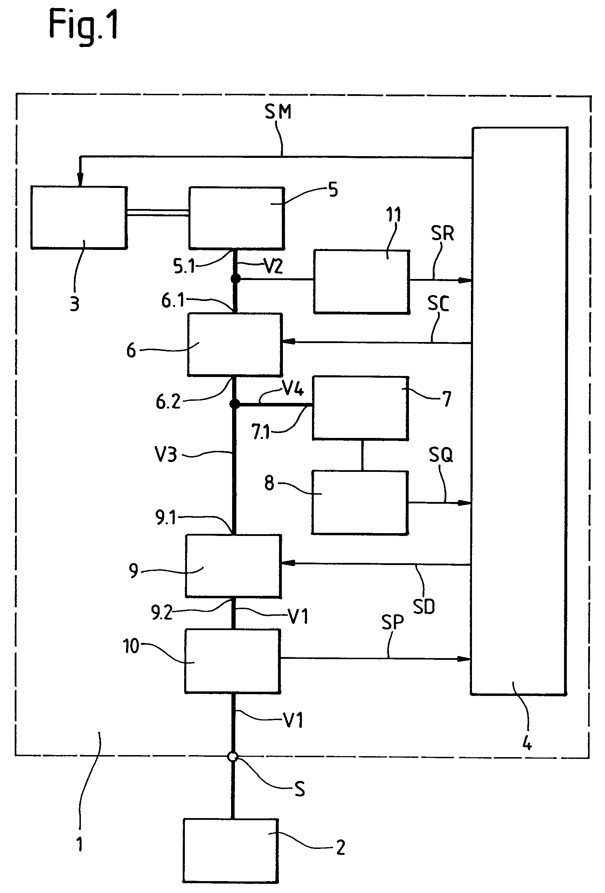

Le groupe électrogène selon la présente invention représenté schématiquement et à titre d'exemple non limitatif à la figure 1 avec la référence générale 1 est destiné à produire de l'énergie électrique sous la forme d'une tension alternative V1 ayant une valeur efficace U1 et une fréquence f1.

Cette énergie électrique est destinée à alimenter un dispositif consommateur quelconque représenté de manière très schématique à la figure 1 avec la référence 2.

Comme cela sera rendu évident par la suite de cette description, la tension alternative V1 peut être, selon la manière dont le groupe électrogène 1 est réalisé, une tension monophasée ou polyphasée, par exemple triphasée.

Les bornes de sortie du groupe électrogène 1, dont le nombre dépend évidemment du nombre de phases de la tension V1 et auxquelles les bornes du dispositif consommateur 2 sont reliées, n'ont pas été représentées séparément et sont désignées, ensemble, par la référence S.

Le groupe électrogène 1 comporte un moteur 3 qui est, dans cet exemple, un moteur à explosion alimenté par un carburateur non représenté séparément.

La position du papillon de ce carburateur, qui détermine le débit et la composition du mélange de combustible et d'air alimentant le moteur 3 et donc la puissance mécanique fournie par ce dernier pour chacune de ses vitesses de rotation, est commandée par la valeur d'un signal électrique de réglage SM fourni, d'une manière qui sera décrite plus loin, par un circuit de commande 4.

Le circuit de commande 4 ne sera pas décrit en détail car il peut être réalisé sans difficulté de plusieurs manières différentes par un spécialiste connaissant les diverses fonctions qu'il doit exécuter et qui seront mentionnées plus loin. L'homme du métier verra d'ailleurs facilement que ce circuit de commande 4 peut être réalisé avantageusement, par exemple, en combinant un micro-ordinateur avec des circuits d'interface adéquats et en programmant ce micro-ordinateur de manière qu'il exécute les fonctions voulues.

Le groupe électrogène 1 comporte en outre un générateur d'énergie électrique 5 ayant de manière classique un stator et un rotor non représentés séparément. Le rotor de ce générateur 5 est directement relié à l'arbre de sortie du moteur 3 par une liaison mécanique symbolisée par un double trait.

Le générateur 5 peut être de l'un quelconque des divers types de générateurs bien connus qui produisent de l'énergie électrique sous la forme d'une tension alternative, monophasée ou polyphasée, en réponse à une rotation de leur rotor par rapport à leur stator, et ne sera donc pas décrit plus en détail.

La tension alternative produite par le générateur 5 est désignée dans la figure 1 par la référence V2, et sa valeur efficace et sa fréquence seront respectivement désignées par les références U2 et f2.

Comme cela sera rendu évident par la suite de cette description, le nombre de phases de la tension V2 peut très bien être différent de celui de la tension V1. En outre, la valeur efficace U2 et la fréquence f2 de cette tension V2 sont variables et, en général, différentes de la valeur efficace U1 et de la fréquence f1 de la tension V1.

Les bornes de sortie du générateur 5 entre lesquelles apparaît la tension V2 et dont le nombre dépend évidemment du nombre de phases de cette dernière n'ont pas été représentées séparément et sont désignées, ensemble, par la référence 5.1.

Le groupe électrogène 1 comporte également un premier circuit convertisseur 6 comportant des premières bornes en nombre égal au nombre des bornes 5.1 du générateur 5 et reliées, chacune, à l'une de ces dernières. Ces premières bornes du convertisseur 6 n'ont pas non plus été représentées séparément et sont désignées, ensemble, par la référence 6.1.

Le convertisseur 6 comporte en outre des deuxièmes bornes, au nombre de deux, qui n'ont pas non plus été représentées séparément et qui sont désignées par la référence 6.2.

Il faut noter ici que chacune des diverses liaisons électriques entre les éléments du groupe électrogène 1 décrits ci-dessus ou qui seront décrits plus loin n'est symbolisée dans la figure 1 que par un seul trait, même si cette liaison est constituée par plusieurs fils conducteurs comme cela est évidemment le cas, par exemple, pour la liaison entre le générateur 5 et le convertisseur 6.

Pour faciliter la compréhension de cette figure 1, les liaisons dont on verra plus loin qu'elles servent à un transfert d'énergie électrique ont été symbolisées par des traits plus épais que celles dont on verra également plus loin qu'elles servent à la transmission de signaux de commande, de réglage ou de mesure.

Le convertisseur 6 mentionné ci-dessus est agencé de manière à produire une tension continue V3 entre ses bornes 6.2 en réponse à la tension alternative V2 qu'il reçoit du générateur 5 lorsque ce dernier est entraîné par le moteur 3. Ce convertisseur 6 est en outre agencé de manière que la valeur U3 de cette tension V3 soit constante quelle que soit la valeur efficace de la tension V2 qui, comme on le verra plus loin, peut varier fortement. De plus, ce convertisseur 6 est agencé de manière à régler la puissance électrique qu'il fournit aux éléments qui lui sont raccordés et qui seront décrits plus loin en fonction de la valeur d'un signal de réglage SC qu'il reçoit du circuit de commande 4.

Dans le présent exemple, et pour une raison qui sera rendue évidente plus loin, le signal SC peut prendre deux valeurs distinctes SC0 et SC1 dans des circonstances qui seront décrites également plus loin. En outre, le convertisseur 6 est agencé de manière à ne transmettre à ses sorties 6.2 aucune puissance électrique lorsque le signal SC a sa valeur SC0, et à transmettre à ces sorties 6.2 toute la puissance électrique qu'il reçoit du générateur 5 lorsque le signal SC a sa valeur SC1.

Un convertisseur tel que le convertisseur 6 est un circuit bien connu des spécialistes et ne sera donc pas décrit en détail.

On rappellera simplement qu'un tel convertisseur comporte généralement un stabilisateur de tension produisant la tension continue désirée à partir d'une tension redressée et éventuellement filtrée fournie par un redresseur recevant la tension alternative appliquée au convertisseur, et ceci même si la valeur de crête de la tension redressée est inférieure à la valeur que doit avoir la tension continue.

Le groupe électrogène 1 comporte encore une source d'énergie électrique rechargeable, désignée par la référence 7, c'est-à-dire un dispositif capable d'emmagasiner et de restituer une certaine quantité d'énergie électrique sous une tension continue. La source 7 comporte deux bornes, désignées ensemble par la référence 7.1, qui sont reliées, chacune, à l'une des bornes de sortie 6.2 du convertisseur 6. La source 7 est en outre agencée de manière que la tension V4 qu'elle produit entre ses bornes 7.1 lorsque ces dernières ne sont pas reliées aux bornes 6.2 du convertisseur 6 soit au moins sensiblement égale à la tension V3 produite par ce dernier.

Lorsque les bornes 7.1 de la source 7 et les bornes 6.2 du convertisseur 6 sont reliées, les tensions V3 et V4 sont évidemment strictement égales.

On admettra que, dans le présent exemple, la source 7 est constituée par une batterie d'accumulateurs classiques tels que des accumulateurs au plomb ou au cadmium-nickel. On notera cependant que la source 7 peut également être constituée d'une manière différente dont un exemple sera décrit plus loin.

Le groupe électrogène 1 comporte également un circuit de surveillance 8 relié à la source 7 et agencé de manière à fournir au circuit de commande 4 un signal de mesure SQ représentatif de l'état de charge de cette source 7, c'est-à-dire de la quantité d'énergie électrique disponible dans cette dernière. On admettra que, dans le présent exemple, le signal SQ a une valeur maximale SQ1 lorsque la source 7 est complètement chargée, et diminue en même temps que cette source 7 se décharge.

Le circuit de surveillance 8 et ses liaisons avec la source 7 ne seront pas décrits en détail car ils peuvent être réalisés de diverses manières bien connues des spécialistes. On mentionnera simplement ici qu'un tel circuit de surveillance comporte généralement au moins deux circuits fournissant des signaux de mesure respectivement représentatifs de la tension aux bornes de la source à laquelle il est associé et du courant de charge ou de décharge de cette dernière, et éventuellement des circuits fournissant des signaux de mesure représentatifs d'autres paramètres de la source tels que sa température ou son age, c'est-à-dire le temps qui s'est écoulé depuis sa première mise en service. Un tel circuit de surveillance comporte également, bien entendu, un circuit de calcul capable d'élaborer le signal représentatif de l'état de la source à laquelle il est relié en fonction des différents signaux de mesure mentionnés ci-dessus.

Le groupe électrogène 1 comporte encore un deuxième circuit convertisseur, désigné par la référence 9.

Ce convertisseur 9 comporte deux bornes d'entrée désignées ensemble par la référence 9.1 et reliées, chacune, à l'une des bornes 6.2 du convertisseur 6, ainsi que des bornes de sortie désignées ensemble par la référence 9.2. Ces bornes de sortie 9.2 sont en nombre égal au nombre des bornes de sortie S du groupe électrogène 1 et sont reliées, chacune, à l'une de ces dernières par l'intermédiaire d'un circuit de mesure 10 qui sera décrit plus loin.

Le convertisseur 9 est destiné à produire la tension alternative V1 de sortie du groupe électrogène 1 à partir de la tension continue V3. Ce convertisseur 9 est donc un circuit du même genre que les circuits couramment appelés onduleurs, qui sont bien connus et ne seront donc pas décrits en détail ici.

On rappellera simplement qu'un onduleur est un circuit qui est destiné à produire une tension alternative, qui peut être monophasée ou multiphasée, à partir d'une tension continue, la valeur de crête de cette tension alternative étant au plus égale à la valeur de cette tension continue. Dans ce but, un onduleur comporte notamment des éléments électroniques tels que des transistors ou des thyristors dont le nombre et le branchement dépendent de la nature monophasée ou polyphasée de la tension alternative qu'il doit produire. En outre, chacun de ces éléments électroniques est commandé par un signal formé d'impulsions périodiques dont la largeur varie en suivant une fonction sinusoïdale. Les diverses fonctions sinusoïdales définissant ces largeurs d'impulsions ont toutes la même amplitude et la même fréquence, qui déterminent respectivement la valeur efficace et la fréquence de la tension alternative produite par l'onduleur, mais sont déphasées les unes par rapport aux autres d'une quantité qui dépend également de la nature monophasée ou multiphasée de cette tension alternative.

Dans le groupe électrogène 1, les divers signaux de commande des éléments électroniques de l'onduleur constituant le convertisseur 9 sont produits en permanence par le circuit de commande 4 et ce convertisseur 9 fonctionne donc également en permanence. Pour ne pas charger inutilement le dessin, l'ensemble des liaisons par lesquelles ces signaux de commande sont transmis du circuit de commande 4 au convertisseur 9 n'a été représenté que par une seule ligne. En outre, pour ne pas compliquer inutilement la description qui va suivre, l'ensemble de ces signaux de commande sera simplement appelé signal de commande du convertisseur 9 et sera désigné par la référence SD.

Le groupe électrogène 1 comporte encore deux circuits de mesure désignés respectivement par les références 10 et 11.

Le circuit de mesure 10 est disposé entre les bornes de sortie 9.2 du convertisseur 9 et les bornes de sortie S du groupe électrogène 1, et il est agencé de manière à fournir au circuit de commande 4 un signal de mesure SP représentatif de la puissance électrique fournie par le groupe électrogène 1 au dispositif consommateur 2, qui est évidemment identique à la puissance électrique absorbée par ce dernier. Ces deux puissances étant identiques, elles seront toutes deux désignées par la même référence Pe dans la suite de cette description.

Le circuit de mesure 10 est en outre agencé de manière que la tension V1 fournie par le convertisseur 9 soit appliquée sans modification aux bornes de sortie S du groupe électrogène 1.

Ce circuit de mesure 10 ne sera pas décrit en détail car il peut être réalisé de diverses manières bien connues des spécialistes. On mentionnera simplement ici que ce circuit 10 peut comporter deux circuits fournissant des signaux de mesure respectivement représentatifs de la valeur efficace de la tension V1 et du courant absorbé par le dispositif consommateur 2, ainsi que le circuit de calcul nécessaire à l'élaboration du signal SP en réponse à ces signaux de mesure.

Le circuit de mesure 11 comporte des bornes d'entrée reliées, dans cet exemple, aux bornes 5.1 du générateur 5, et il est agencé de manière à fournir au circuit de commande 4 un signal de mesure SR représentatif de la vitesse de rotation du rotor de ce générateur 5 et donc de la vitesse de rotation du moteur 3. Cette vitesse de rotation sera désignée par la référence R dans la suite de cette description.

Le circuit de mesure 11 ne sera pas non plus décrit en détail car il peut être réalisé de diverses manières bien connues des spécialistes. On admettra que, dans le présent exemple, ce circuit 11 est agencé de manière que le signal SR dépende de la fréquence f2 de la tension V2, fréquence qui est bien entendu proportionnelle à la vitesse de rotation R du rotor du générateur 5 et du moteur 3.

Il faut noter que, si cela est nécessaire, des moyens de protection contre toute surintensité constitués par exemple par des fusibles ou des disjoncteurs peuvent être intercalés entre le circuit de mesure 10 et les bornes de sortie S du groupe électrogène 1. De tels moyens de protection n'ont pas été représentés car ils n'ont pas de lien direct avec la présente invention.

Comme cela sera décrit en détail plus loin, la puissance électrique Pe absorbée par le dispositif consommateur 2 lorsque le groupe électrogène 1 fonctionne est généralement fournie, sous forme de puissance mécanique, par le moteur 3. Cette puissance mécanique, qui sera désignée par Pm, est transformée en puissance électrique par le générateur 5 et transmise au dispositif consommateur 2 par l'intermédiaire des convertisseurs 6 et 9.

Une partie de la puissance mécanique Pm fournie par le moteur 3 est dissipée dans le générateur 5 lors de sa transformation en puissance électrique, et une partie de cette dernière est dissipée dans les convertisseurs 6 et 9 lors de sa transmission au dispositif consommateur 2.

La puissance dissipée dans le générateur 5 et dans les convertisseurs 6 et 9 est cependant généralement faible par rapport à la puissance électrique Pe fournie par le groupe électrogène 1 et sera négligée dans la description détaillée du fonctionnement de ce groupe électrogène 1 qui va suivre, car l'homme du métier verra sans difficulté comment dimensionner les divers composants du groupe électrogène 1 pour tenir compte, si nécessaire, de cette puissance dissipée.

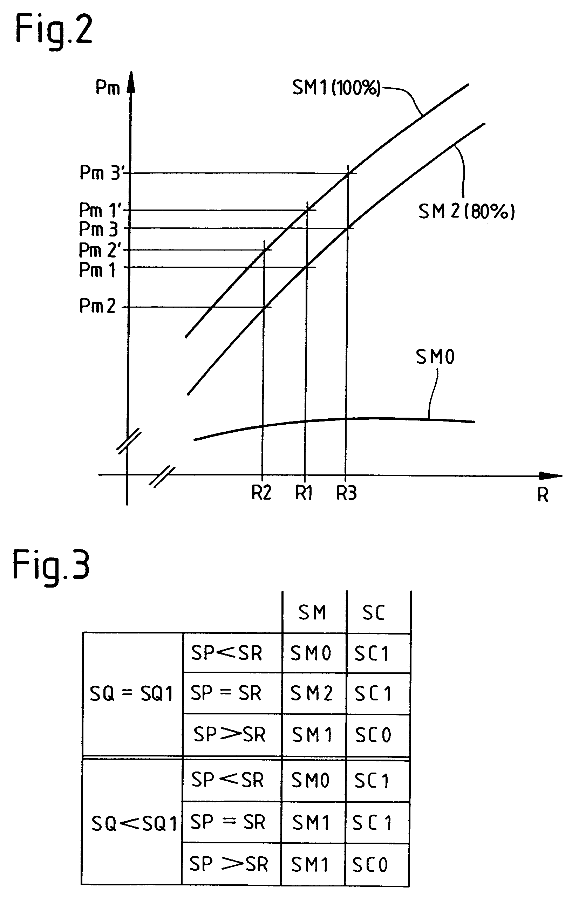

La figure 2 représente schématiquement la variation bien connue de la puissance mécanique Pm fournie par le moteur 3 en fonction de sa vitesse de rotation R pour trois valeurs différentes SM0, SM1 et SM2 du signal SM. Dans le présent exemple, la valeur SM0 est celle pour laquelle le papillon du carburateur du moteur 3 est complètement fermé ou, en d'autres termes, occupe la position généralement appelée position de ralenti. Lorsque le signal SM a cette valeur SM0, le moteur 3 ne fournit donc presque plus de puissance mécanique, quelle que soit sa vitesse de rotation. De même, la valeur SM1 est celle pour laquelle le papillon du carburateur du moteur 3 est complètement ouvert, c'est-à-dire pour laquelle ce moteur 3 fournit, à chacune de ses vitesses de rotation, la puissance maximale qu'il peut fournir à cette vitesse. Enfin, la valeur SM2 est celle pour laquelle ce papillon occupe une position telle que le moteur 3 fournit, à chacune de ses vitesses de rotation, une fraction déterminée de la puissance maximale qu'il peut fournir à cette vitesse. On admettra que cette fraction déterminée est égale à 80% dans le présent exemple.

Pour une raison qui sera rendue évidente plus loin, les circuits de mesure 10 et 11 mentionnés ci-dessus sont agencés de manière que les signaux SP et SR soient de même nature. Par exemple, chacun de ces signaux SP et SR peut être constitué par une tension électrique. En outre, ces circuits de mesure 10 et 11 sont agencés de manière que, quelle que soit la puissance électrique Pe absorbée par le dispositif consommateur 2, les signaux SP et SR soient égaux lorsque le signal SM a la valeur SM2 définie ci-dessus et que le moteur 3 tourne à la vitesse à laquelle la puissance mécanique Pm qu'il fournit est égale à cette puissance électrique Pe.

De plus, le circuit de commande 4 est agencé de manière que le signal SM ait la valeur SM0 lorsque le signal SP est inférieur au signal SR et la valeur SM1 lorsque ce signal SP est supérieur au signal SR, et de manière que, lorsque ces signaux SP et SR sont égaux, ce signal SM ait la valeur SM2 si le signal SQ est égal à SQ1 et la valeur SM1 si ce signal SQ est inférieur à SQ1. Ce circuit de commande 4 est en outre agencé de manière que le signal SC ait sa valeur SC1 lorsque le signal SP est inférieur ou égal au signal SR et sa valeur SC0 lorsque ce signal SP est supérieur à ce signal SR.

Ce fonctionnement du circuit de commande 4 est résumé dans le tableau de la figure 3.

Le fonctionnement du groupe électrogène 1 va être décrit ci-après, en commençant à un instant arbitraire où la puissance électrique Pe absorbée par le dispositif consommateur 2 a une valeur Pe1 non nulle, inférieure à la puissance électrique maximale que peut fournir le groupe électrogène 1 et n'ayant pas varié depuis un certain temps. On admettra en outre que, à ce même instant, la source 7 est complètement chargée et que le signal SQ a donc sa valeur SQ1.

Dans ces conditions, et comme cela sera rendu évident plus loin, le moteur 3 tourne à la vitesse R1 pour laquelle le signal SR a une valeur SR1 égale à la valeur SP1 du signal SP correspondant à la valeur Pe1 de la puissance électrique Pe.

Le signal SM a donc la valeur SM2, et le moteur 3 fournit une puissance Pm1 égale, d'une part, à cette puissance électrique Pe1 et, d'autre part, à 80% de la puissance mécanique maximale Pm1' qu'il peut fournir à cette vitesse R1.

La puissance électrique produite par le générateur 5 a donc également la valeur Pe1.

En outre, le signal SC a la valeur SC1, de sorte que le convertisseur 6 transmet au convertisseur 9 toute la puissance électrique Pe1 qu'il reçoit du générateur 5. Le convertisseur 9 fonctionnant en permanence, cette puissance électrique Pe1 est donc transmise en totalité au dispositif utilisateur 2.

Il faut noter que, dans cette situation, la vitesse de rotation R du moteur 3 ne varie pas puisque la puissance mécanique Pm1 qu'il produit est égale à celle qui est absorbée par le générateur 5 pour produire la puissance électrique Pe1, et que le couple moteur fourni par ce moteur 3 est donc égal au couple de freinage créé par ce générateur 5.

Le groupe électrogène 1 est donc dans une situation stable qui reste inchangée tant que la puissance électrique Pe absorbée par le dispositif consommateur 2 reste constante.

Considérons maintenant un cas où, après être restée un certain temps à la valeur Pe1, la puissance électrique Pe absorbée par le dispositif consommateur 2 diminue brusquement et prend une nouvelle valeur non nulle Pe2.

Le signal SP prend alors une nouvelle valeur SP2 inférieure à la valeur SP1 précédente. Le circuit de commande 4 donne donc au signal SM la valeur SM0 pour laquelle le papillon du carburateur du moteur 3 est dans sa position de ralenti, mais continue à donner au signal SC la valeur SC1.

Le moteur 3 ne fournit donc pratiquement plus de puissance mécanique mais continue à tourner, à une vitesse décroissante, en réponse à son énergie cinétique et à celle du générateur 5. Ce dernier continue donc à fournir de la puissance électrique, et comme le signal SC a sa valeur SC1, cette puissance électrique est égale à la puissance électrique Pe2 qui est absorbée par le dispositif consommateur 2.

Lorsque la vitesse de rotation R du moteur 3 atteint la valeur R2 pour laquelle la valeur SR2 du signal SR est égale à la nouvelle valeur SP2 du signal SP, le circuit de commande 4 redonne au signal SM la valeur SM2.

La puissance mécanique Pm2 que le moteur 3 fournit alors est donc à nouveau égale au 80% de sa puissance mécanique maximale Pm2', et cette puissance mécanique Pm2 est en outre égale à la puissance électrique Pe2 absorbée par le dispositif consommateur 2 puisque la valeur SR2 du signal SR est égale à la valeur SP2 du signal SP.

Le groupe électrogène 1 se trouve donc à nouveau dans une situation stable qui ne diffère de la précédente que par les valeurs de la vitesse de rotation R du moteur 3, de la puissance mécanique Pm qu'il fournit, et de la puissance électrique Pe produite par le générateur 5 et transmise au dispositif utilisateur 2 par l'intermédiaire des convertisseurs 6 et 9.

Cette situation reste inchangée tant que la valeur de cette puissance électrique Pe reste constante et égale à Pe2.

Considérons maintenant un cas où, après être restée un certain temps à la valeur Pe2, la puissance électrique Pe absorbée par le dispositif consommateur 2 augmente brusquement et prend une nouvelle valeur Pe3.

Le signal SP prend alors une nouvelle valeur SP3 supérieure à la valeur SP2 précédente. Le circuit de commande 4 donne donc au signal SM la valeur SM1 pour laquelle le papillon du carburateur du moteur 3 est complètement ouvert.

Simultanément, le circuit de commande 4 donne au signal SC sa valeur SC0 pour laquelle le convertisseur 6 ne fournit plus aucune puissance électrique.

La puissance électrique fournie par le générateur 5 devient donc également nulle, de même que le couple de freinage exercé par ce générateur 5 sur le moteur 3. Toute la puissance mécanique fournie par le moteur 3 est donc maintenant disponible pour accélérer ce dernier et le rotor du générateur 5.

Le convertisseur 6 ne fournissant plus de puissance électrique, la puissance électrique Pe3 absorbée par le dispositif consommateur 2 est maintenant fournie par la source 7. Cette dernière se décharge donc, et la valeur du signal SQ diminue et devient inférieure à SQ1.

Lorsque la vitesse de rotation R du moteur 3 atteint la valeur R3 pour laquelle la valeur SR3 du signal SR est égale à la valeur SP3 du signal SP, le circuit de commande 4 redonne au signal SC sa valeur SC1, mais maintient encore le signal SM à sa valeur maximale SM1, puisque le signal SQ est inférieur à SQ1.

Dans ces conditions, le moteur 3 fournit sa puissance mécanique maximale Pm3', et le générateur 5 fournit une puissance électrique égale à cette puissance mécanique Pm3' et supérieure à la valeur Pe3 de la puissance électrique Pe absorbée par le dispositif consommateur 2.

La différence entre cette puissance Pm3', qui est également celle qui est fournie par le convertisseur 6 puisque le signal SC a sa valeur SC1, et la puissance Pe3 absorbée par le dispositif consommateur 2 est absorbée par la source 7, dont on rappellera qu'elle est constituée dans le présent exemple par une batterie d'accumulateurs classiques, qui est partiellement déchargée à cet instant comme cela a été mentionné ci-dessus.

Les bornes 7.1 de la source 7 étant directement reliées aux bornes de sortie 6.2 du convertisseur 6, cette source 7 se recharge donc sous une tension constante, c'est-à-dire la tension V3, et le courant qu'elle absorbe pendant sa charge diminue au fur et à mesure que la quantité d'énergie électrique qu'elle contient augmente.

Cette diminution du courant absorbé par la source 7 a pour effet que la puissance mécanique que doit fournir le moteur 3 diminue et que sa vitesse de rotation R a tendance à augmenter, de même que la valeur du signal SR.

Mais dès que la valeur de ce signal SR devient supérieure à la valeur SP3 du signal SP, le circuit de commande 4 redonne au signal SM la valeur SM0, de sorte que la puissance mécanique Pm fournie par le moteur 3 devient presque nulle et que sa vitesse de rotation R diminue. Lorsque la valeur du signal SR atteint à nouveau la valeur SR3 égale à la valeur SP3, le circuit de commande 4 redonne au signal SM la valeur SM1 et le moteur 3 recommence à fournir sa puissance maximale Pm3'.

Ce processus se répète plusieurs fois mais, comme le courant absorbé par la source 7 continue à diminuer, le rapport entre le temps pendant lequel le moteur 3 fournit sa puissance maximale Pm3' et le temps pendant lequel il ne fournit qu'une puissance presque nulle diminue, de sorte que la puissance mécanique moyenne fournie par ce moteur 3 diminue progressivement.

Lorsque la source 7 est complètement rechargée, le signal SQ atteint à nouveau la valeur SQ1. Le circuit de commande 4 redonne alors la valeur SM2 au signal SM lorsque le moteur 3 tourne à la vitesse R3 et que le signal SR a donc sa valeur SR3 égale à la valeur SP3 du signal SP.

La puissance mécanique Pm3 que le moteur 3 fournit alors est donc à nouveau égale au 80% de sa puissance mécanique maximale Pm3', et cette puissance mécanique Pm3 est en outre égale à la puissance électrique Pe3 absorbée par le dispositif consommateur 2 puisque la valeur SR3 du signal SR est égale à la valeur SP3 du signal SP.

Cette situation reste inchangée tant que la puissance électrique Pe absorbée par le dispositif consommateur 2 ne varie pas et reste égale à Pe3.

Un processus similaire à l'un de ceux qui viennent d'être décrits se déroule évidemment chaque fois que la puissance électrique Pe absorbée par le dispositif consommateur 2 se modifie.

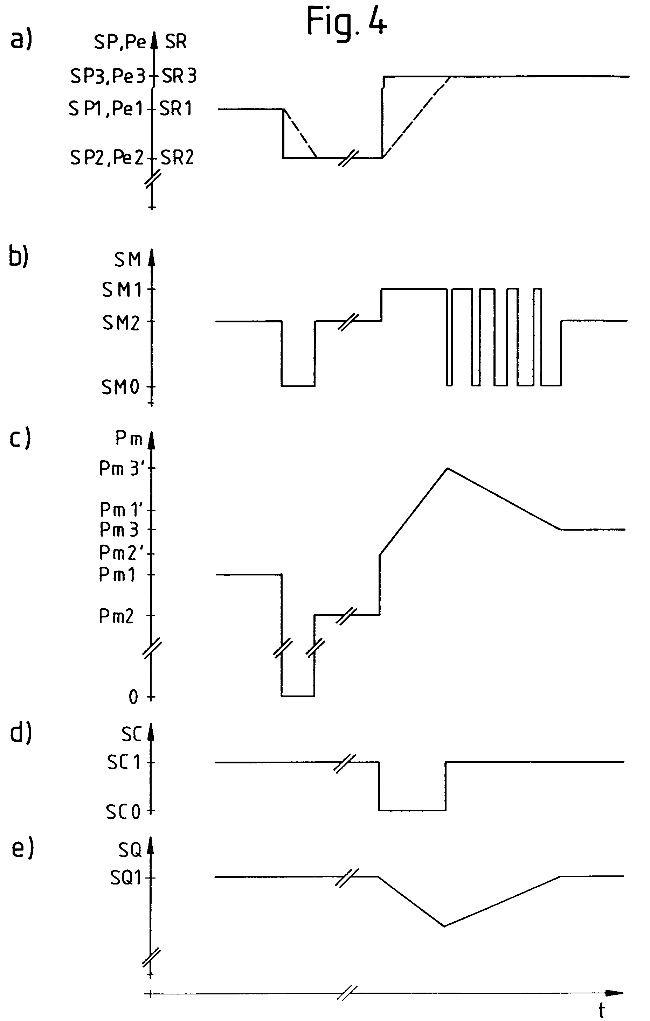

La figure 4 illustre schématiquement le déroulement des divers processus décrits ci-dessus en fonction du temps t.

Dans cette figure 4, le diagramme a) représente par un trait continu la puissance électrique Pe absorbée par le dispositif consommateur 2 et le signal SP correspondant ainsi que, par un trait interrompu, le signal SR représentatif de la vitesse de rotation R du moteur 3. Comme on l'a vu ci-dessus, le signal SR n'est différent du signal SP que pendant de courts laps de temps qui suivent chaque changement de la valeur de la puissance électrique Pe. C'est pourquoi le trait interrompu représentant le signal SR n'est visible qu'aux endroits du diagramme a) correspondant à ces laps de temps.

Les diagrammes b) à e) de cette figure 4 représentent respectivement les valeurs du signal SM, de la puissance mécanique Pm fournie par le moteur 3, du signal SC et du signal SQ.

Il faut noter que les variations du signal SR et de la puissance mécanique Pm ne sont généralement pas linéaires comme cela a été représenté dans un but de simplification.

Les divers éléments du groupe électrogène 1, et notamment le circuit de commande 4, peuvent évidemment être agencés de manière que ce groupe électrogène 1 fonctionne d'une manière différente de celle qui vient d'être décrite.

Ainsi, par exemple, le circuit de commande 4 peut être agencé de manière que, lorsque la puissance électrique Pe absorbée par le dispositif consommateur 2 augmente, le signal SC ne prenne pas sa valeur SC0 comme dans l'exemple décrit ci-dessus mais une autre valeur fixe telle que le convertisseur 6 continue à fonctionner, tout en limitant la puissance électrique qu'il transmet de ses entrées 6.1 à ses sorties 6.2 à une valeur non nulle déterminée par cette autre valeur du signal SC. Cette puissance électrique limitée est évidemment produite par le générateur 5, de sorte que la puissance mécanique fournie par le moteur 3 ne sert plus exclusivement à accélérer ce dernier et le rotor du générateur 5, une partie de cette puissance mécanique étant encore convertie en puissance électrique par le générateur 5. Pendant cette accélération, la source 7 ne doit donc fournir que la partie de la puissance électrique Pe absorbée par le dispositif consommateur 2 qui n'est plus fournie par le convertisseur 6.

Il est donc possible, dans un tel cas, de dimensionner la source 7 de manière que la quantité maximale d'énergie électrique qu'elle doit pouvoir emmagasiner soit plus faible, et donc que son prix de revient soit plus bas, que dans l'exemple décrit à l'aide de la figure 4.

Dans un cas similaire à celui qui vient d'être décrit, la valeur donnée au signal SC par le circuit de commande 4 peut ne pas être fixe mais dépendre de la valeur de l'augmentation de la puissance électrique Pe absorbée par le dispositif consommateur 2.

On voit que chaque variation de la puissance électrique Pe absorbée par le dispositif consommateur 2 entraîne une variation de la vitesse de rotation R du moteur 3 et du générateur 5, et donc une variation de la valeur efficace U2 et de la fréquence f2 de la tension alternative V2 produite par ce dernier.

Mais on voit également que ces variations de la valeur efficace U2 et de la fréquence f2 de la tension V2 n'ont aucune influence sur la valeur efficace U1 et sur la fréquence f1 de la tension V1 produite par le groupe électrogène 1 puisque cette valeur efficace U1 et cette fréquence f1 ne dépendent que de la valeur U3 de la tension continue V3, qui est constante, et des caractéristiques du signal SD commandant le convertisseur 9, qui sont déterminées par le circuit de commande 4 indépendamment de la valeur efficace U2 et de la fréquence f2 de la tension V2.

Cette propriété du groupe électrogène 1 constitue un grand avantage de ce dernier par rapport aux groupes électrogènes connus.

On voit de plus que la valeur efficace U1 et la fréquence f1 de la tension V1 peuvent être choisies très librement puisqu'il suffit d'agencer le circuit de commande 4 de manière que le signal SD de commande du convertisseur 9 ait les caractéristiques voulues. On peut même agencer le circuit de commande 4 de manière que ces caractéristiques du signal SD, et donc cette valeur efficace U1 et/ou cette fréquence f1, dépendent, par exemple, de la position d'un ou de plusieurs commutateurs disposés sur un tableau de commande du groupe électrogène 1. Par exemple, dans un cas où la tension V1 est une tension monophasée, on peut prévoir un commutateur à deux positions sur ce tableau de commande et agencer le circuit de commande 4 de manière que la valeur efficace U1 et la fréquence f1 de la tension V1 soient respectivement égales à 220V et à 50 Hz ou à 110V et 60 Hz selon que ce commutateur est dans l'une ou l'autre de ses positions.

En outre, le fait que la valeur efficace U1 de la tension alternative V1 produite par le groupe électrogène 1 est indépendante de la valeur efficace U2 de la tension alternative V2 produite par le générateur 5 évite d'avoir à réguler cette tension V2.

Il en résulte que le groupe électrogène 1 présente l'avantage supplémentaire de ne comporter aucun dispositif semblable à celui qui sert, dans les groupes électrogènes connus, à régler l'intensité du courant passant dans les enroulements d'excitation du rotor du générateur.

De plus, le rotor du générateur 5 du groupe électrogène 1 ne doit pas obligatoirement comporter de tels enroulements d'excitation, ceux-ci pouvant avantageusement être remplacés par des aimants permanents. Ceci représente un autre avantage du groupe électrogène 1 par rapport aux groupes électrogènes connus, car on sait qu'un générateur dont le rotor comporte des aimants permanents est généralement moins encombrant et moins cher qu'un générateur dont le rotor comporte des enroulements d'excitation.

On a vu ci-dessus que, quelle que soit la vitesse de rotation R du moteur 3, celui-ci fournit la plupart du temps une puissance mécanique qui est une fraction définie de sa puissance maximale à cette vitesse. Il est donc possible de dimensionner le moteur 3 de manière que son rendement soit maximal, ou au moins presque maximal, et que la quantité de gaz polluants qu'il émet soit minimale, ou au moins presque minimale, lorsqu'il fournit cette fraction définie de sa puissance maximale.

Une telle optimalisation du rendement et de la quantité de gaz polluants émis n'est pas possible pour les moteurs équipant les groupes électrogènes connus, puisque ces moteurs doivent tourner à une vitesse de rotation constante en fournissant une puissance mécanique variable et qu'ils ne fonctionnent donc presque jamais dans des conditions optimales de rendement et d'émission de gaz polluants.

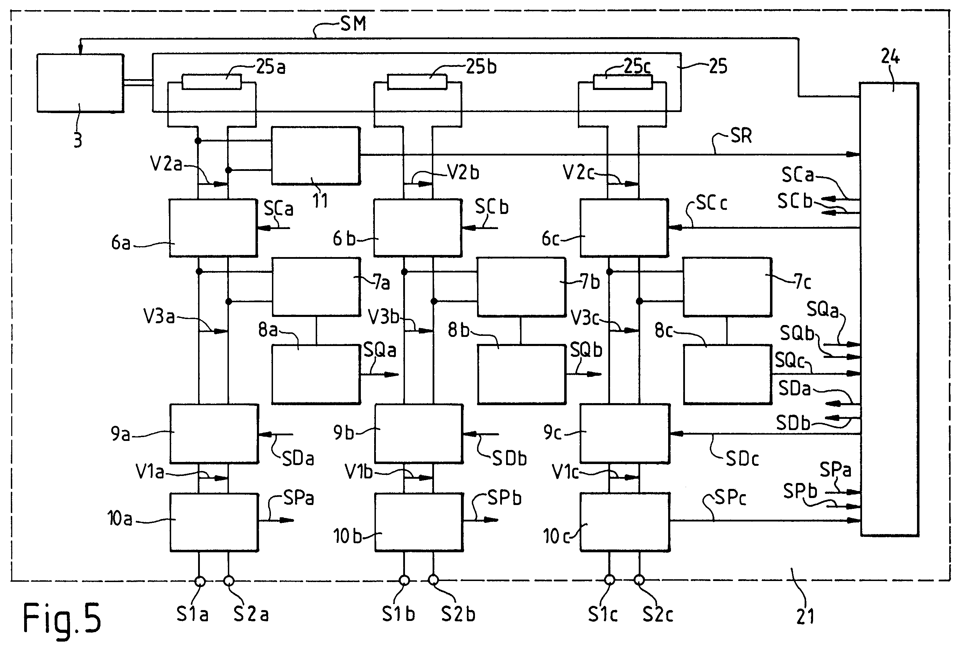

Dans sa forme d'exécution représentée schématiquement à la figure 5, le groupe électrogène selon la présente invention, qui est désigné par la référence 21, comporte un moteur semblable au moteur 3 du groupe électrogène 1 de la figure 1 et désigné par la même référence. Le moteur 3 du groupe électrogène 21 comporte, comme le moteur 3 du groupe électrogène 1, un carburateur ayant un papillon dont la position dépend de la valeur d'un signal, également désigné par SM, produit par un circuit de commande 24.

Le circuit de commande 24 ne sera pas décrit en détail car il peut être réalisé de diverses manières et sans difficulté par un homme du métier connaissant le fonctionnement du groupe électrogène 21.

En particulier, et comme le circuit de commande 4 de la figure 1, ce circuit de commande 24 peut être réalisé par exemple en combinant un micro-ordinateur avec des circuits d'interface adéquats et en programmant ce micro-ordinateur de manière qu'il exécute les fonctions voulues.

Le moteur 3 est couplé mécaniquement au rotor, non représenté, d'un générateur 25 dont le stator comporte, dans cet exemple, trois enroulements 25a, 25b et 25c isolés électriquement les uns des autres.

Le groupe électrogène 21 comporte encore trois ensembles d'éléments formés chacun d'un premier convertisseur 6, d'une source 7, d'un circuit de surveillance 8, d'un deuxième convertisseur 9 et d'un circuit de mesure 10, ces références numériques étant complétées par une lettre a, b ou c selon l'ensemble dont fait partie chaque élément.

Chacun de ces éléments 6a à 10a, 6b à 10b et 6c à 10c est semblable à l'élément désigné par la même référence numérique dans la figure 1 et, dans chaque ensemble, les éléments sont reliés entre eux comme les éléments correspondants de la figure 1. Ces éléments et leurs liaisons ne seront donc pas décrits à nouveau ici.

On mentionnera simplement que les entrées des convertisseurs 6a à 6c sont respectivement reliées aux enroulements 25a à 25c du générateur 25. De même, les convertisseurs 9a à 9c sont agencés dans cet exemple de manière que les tensions alternatives V1a, V1b et V1c qu'ils produisent soient des tensions monophasées. Il faut noter que cette caractéristique n'est cependant pas obligatoire et que, dans d'autres formes d'exécution, ces convertisseurs 9a, 9b et 9c peuvent être agencés de manière qu'une ou plusieurs de ces tensions V1a, V1b et V1c soient des tensions polyphasées, par exemple triphasées.

Par analogie avec le cas de la figure 1, les signaux de commande des convertisseurs 6a à 6c et 9a à 9c, qui sont produits par le circuit de commande 24, ainsi que les signaux fournis à ce circuit de commande 24 par les circuits de surveillance 8a à 8c et par les circuits de mesure 10a à 10c sont également désignés par les références SC, SD, SQ et, respectivement, SP, ces références étant complétées par la même lettre a, b ou c que la référence numérique de l'élément concerné.

Le groupe électrogène 21 comporte encore des bornes de sortie S1a, S2a, S1b, S2b, S1c et S2c qui sont reliées, chacune, à une sortie de l'un des convertisseurs 9a à 9c par l'intermédiaire des circuits de mesure 10a à 10c. Les tensions alternatives produites par ces convertisseurs 9a à 9c, qui sont respectivement désignées par les références V1a, V1b et V1c, apparaissent donc entre les bornes S1a et S2a, S1b et S2b et, respectivement, S1c et S2c.

Le groupe électrogène 21 comporte également un circuit de mesure de la vitesse de rotation du générateur 25 semblable au circuit 11 de la figure 1 et désigné par la même référence que ce dernier. Ce circuit de mesure 11 est relié à l'enroulement 25a du générateur 25, et il fournit au circuit de commande 24 un signal, également désigné par SR, qui est représentatif de la fréquence de la tension V2a produite par cet enroulement 25a en réponse à la rotation du rotor du générateur 25, et donc représentatif de la vitesse de rotation du moteur 3.

Le fonctionnement du groupe électrogène 21 ne sera pas décrit en détail car il est très semblable à celui du groupe électrogène 1.

Il faut cependant noter que le groupe électrogène 21 peut être utilisé pour alimenter en énergie électrique un ou plusieurs dispositifs consommateurs, comme cela sera montré plus loin, et que dans ce dernier cas, ces dispositifs consommateurs peuvent absorber des puissances électriques différentes les unes des autres.

Le circuit de commande 24 est donc agencé de manière que, quelle que soit la puissance électrique totale absorbée par le ou les dispositifs consommateurs, le moteur 3 tourne la plupart du temps à la vitesse pour laquelle la puissance mécanique qu'il fournit, qui est égale à cette puissance électrique totale, soit aussi égale à une fraction déterminée, par exemple 80 %, de sa puissance mécanique maximale à cette vitesse.

Pour assurer ce réglage, le circuit de commande 24 détermine en permanence la somme des signaux SPa, SPb et SPc, compare cette somme à la valeur du signal SR et détermine en fonction de cette comparaison la valeur des signaux SM, SCa, SCb et SCc d'une manière similaire à celle qui a été décrite ci-dessus dans le cadre de la description du fonctionnement du groupe électrogène 1.

Les valeurs efficaces et les fréquences des trois tensions V1a, V1b et V1c sont évidemment indépendantes de la puissance électrique absorbée par le ou les dispositifs consommateurs alimentés par le groupe électrogène 21, pour les mêmes raisons, mentionnées ci-dessus, que dans le cas de la tension V1 produite par le groupe électrogène 1.

Ces trois tensions V1a, V1b et V1c peuvent évidemment avoir des valeurs efficaces et des fréquences identiques, auquel cas les trois signaux SDa, SDb et SDc peuvent être également identiques.

Mais, et c'est là un avantage supplémentaire du groupe électrogène 21, le circuit de commande 24 peut être agencé de manière que les caractéristiques des signaux SDa, SDb et SDc soient telles que la valeur efficace et/ou la fréquence de l'une des trois tensions V1a, V1b et V1c soient différentes de la valeur efficace et/ou de la fréquence des deux autres tensions, ou même que les valeurs efficaces et/ou les fréquences de ces trois tensions soient toutes différentes les unes des autres.

Le circuit de commande 24 peut également être agencé de manière que les caractéristiques des signaux SDa, SDb et SDc, et donc la valeur efficace et/ou la fréquence de chacune des tensions V1a, V1b et V1c, dépendent, séparément pour chacun de ces signaux, de la position d'un ou de plusieurs commutateurs disposés sur un tableau de commande du groupe électrogène 21. Ainsi, par exemple, on peut prévoir sur ce tableau de commande trois commutateurs à deux positions et agencer le circuit de commande 24 de manière que chacune des tensions V1a, V1b et V1c ait une valeur efficace de 220V et une fréquence de 50 Hz, ou une valeur efficace de 110V et une fréquence de 60 Hz selon la position de l'un de ces commutateurs.

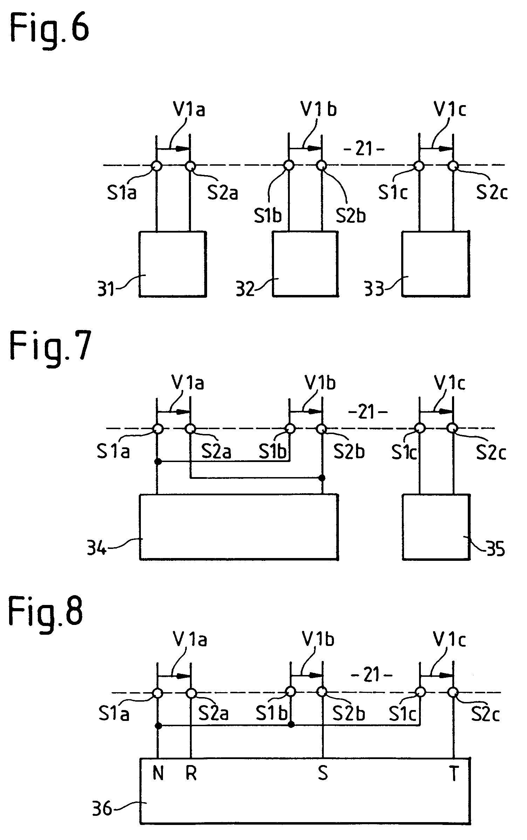

Ces propriétés du groupe électrogène 21 permettent d'utiliser celui-ci pour alimenter trois dispositifs consommateurs distincts. Un tel cas est représenté à la figure 6 dans laquelle le groupe électrogène 21 n'est représenté que par ses bornes de sortie S1a, S2a, S1b, S2b, S1c et S2c et dans laquelle les trois dispositifs consommateurs sont désignés par les références 31, 32 et 33.

Comme cela a été mentionné ci-dessus, le groupe électrogène 21 peut très bien alimenter ces trois dispositifs consommateurs 31, 32 et 33 même si ces derniers nécessitent des tensions d'alimentation ayant des valeurs efficaces et/ou des fréquences différentes les unes des autres.

La puissance électrique maximale que peut fournir chacun des ensembles d'éléments 6a à 10a, 6b à 10b et 6c à 10c du groupe électrogène 21 est évidemment limitée par la constitution de ces éléments.

Mais les propriétés du groupe électrogène 21 mentionnées ci-dessus permettent de l'utiliser pour alimenter un dispositif consommateur fonctionnant sous une tension monophasée et absorbant une puissance électrique supérieure à la puissance électrique maximale que peut fournir chacun de ces ensembles d'éléments.

La figure 7 illustre un tel cas, dans lequel le groupe électrogène 21, qui n'est à nouveau représenté que par ses bornes de sortie S1a, S2a, S1b, S2b, S1c et S2c, est utilisé pour alimenter un dispositif consommateur, désigné par la référence 34, absorbant une puissance électrique supérieure à la puissance électrique maximale que peut fournir chacun des ensembles d'éléments 6a à 10a et 6b à 10b, mais inférieure ou égale à la somme de ces puissances maximales.

Dans ce cas, les bornes S1a et S1b du groupe électrogène 21 sont reliées, ensemble, à l'une des bornes d'alimentation du dispositif consommateur 34, et les bornes S2a et S2b de ce groupe électrogène 21 sont reliées, ensemble, à l'autre borne d'alimentation de ce dispositif consommateur 34. La puissance électrique consommée par ce dernier est donc fournie par les deux ensembles d'éléments 6a à 10a et 6b à 10b fonctionnant en parallèle.

Dans un tel cas, il faut bien entendu que le circuit de commande 24 du groupe électrogène 21 soit agencé de manière que les signaux SDa et SDb appliqués aux convertisseurs 9a et 9b soient identiques, pour que les deux tensions V1a et V1b aient la même valeur efficace et la même fréquence, et que ces deux tensions V1a et V1b soient en outre en phase l'une avec l'autre.

Toujours dans un tel cas, un deuxième dispositif consommateur, désigné par la référence 35, peut aussi être alimenté par le groupe électrogène 21, la tension V1c produite par ce dernier entre ses bornes S1c et S2c auxquelles est relié le dispositif consommateur 35 pouvant évidemment avoir une valeur efficace et/ou une fréquence différentes de celles des tensions V1a et V1b.

D'une manière analogue, qui n'a pas été illustrée, le groupe électrogène 21 peut être utilisé pour alimenter un dispositif consommateur fonctionnant sous une tension monophasée et absorbant une puissance électrique supérieure à celle qui est absorbée par le dispositif consommateur 34 de l'exemple précédent, mais inférieure ou égale à la somme des puissances maximales que peuvent fournir les ensembles d'éléments 6a à 10a, 6b à 10b et, respectivement, 6c à 10c.

Dans un tel cas, les bornes S1a, S1b et S1c du groupe électrogène 21 sont reliées, ensemble, à une des bornes d'alimentation de ce dispositif consommateur, et les bornes S2a, S2b et S2c de ce groupe électrogène 21 sont reliées, ensemble, à l'autre borne d'alimentation de ce dispositif consommateur.

La puissance électrique absorbée par ce dernier est alors fournie par les trois ensembles d'éléments 6a à 10a, 6b à 10b et 6c à 10c fonctionnant en parallèle.

En outre, il faut bien entendu que le circuit de commande 24 du groupe électrogène 21 soit agencé, dans ce cas, de manière que les signaux SDa, SDb et SDc appliqués aux convertisseurs 9a, 9b et 9c soient identiques, pour que les trois tensions V1a, V1b et V1c aient la même valeur efficace et la même fréquence, et que ces trois tensions V1a, V1b et V1c soient en phase les unes avec les autres.

Les propriétés du groupe électrogène 21 mentionnées ci-dessus permettent aussi d'utiliser celui-ci pour alimenter un dispositif consommateur fonctionnant sous une tension triphasée en étoile.

Un tel cas est illustré à la figure 8, dans laquelle le groupe électrogène 21 n'est à nouveau représenté que par ses bornes de sortie S1a, S2a, S1b, S2b, S1c et S2c et dans laquelle le dispositif consommateur qu'il alimente est désigné par la référence 36.

Dans ce cas, la borne neutre N du dispositif consommateur 36 est reliée aux trois bornes S1a, S1b et S1c du groupe électrogène 21, et les trois autres bornes R, S et T de ce dispositif consommateur 36 sont respectivement reliées aux bornes S2a, S2b et S2c de ce groupe électrogène 21. En outre, le circuit de commande 24 de ce dernier est agencé de manière que les signaux SDa, SDb et SDc appliqués aux convertisseurs 9a, 9b et 9c soient tels que les tensions V1a, V1b et V1c aient la même valeur efficace et la même fréquence, mais que chacune de ces trois tensions soit déphasée de 120° par rapport aux deux autres.

Toujours dans ce cas, la puissance électrique absorbée par le dispositif consommateur 36 est évidemment fournie par les trois ensembles d'éléments 6a à 10a, 6b à 10b et 6c à 10c fonctionnant en parallèle. Cette puissance électrique absorbée par le dispositif consommateur 36 peut donc être égale, au maximum, à la somme des puissances électriques maximales que peuvent fournir les ensembles d'éléments 6a à 10a, 6b à 10b et, respectivement, 6c à 10c.

Dans les exemples décrits ci-dessus et illustrés par les figures 6 à 8, les diverses connexions qui sont nécessaires pour que le groupe électrogène 21 alimente un ou plusieurs dispositifs consommateurs de l'une ou l'autre des manières décrites sont réalisées à l'extérieur de ce groupe électrogène 21.

Ces connexions peuvent également être réalisées à l'intérieur du groupe électrogène 21.

Dans tous les cas où le groupe électrogène 21 est destiné à alimenter un nombre défini de dispositifs consommateurs d'une manière également définie, ces connexions peuvent être fixes. Mais ces connexions peuvent également être réalisées à l'aide d'un commutateur à plusieurs positions disposé sur le tableau de commande du groupe électrogène 21 et relié aux bornes de sortie de ce dernier et aux sorties des convertisseurs 9a, 9b et 9c de manière que, dans chacune de ces positions, il établisse les connexions nécessaires à l'une des utilisations du groupe électrogène 21 décrites ci-dessus. Ce commutateur peut également être relié au circuit de commande 24 et ce dernier peut être agencé de manière à produire les signaux SDa, SDb et SDc avec les caractéristiques voulues dans chacune des positions du commutateur.

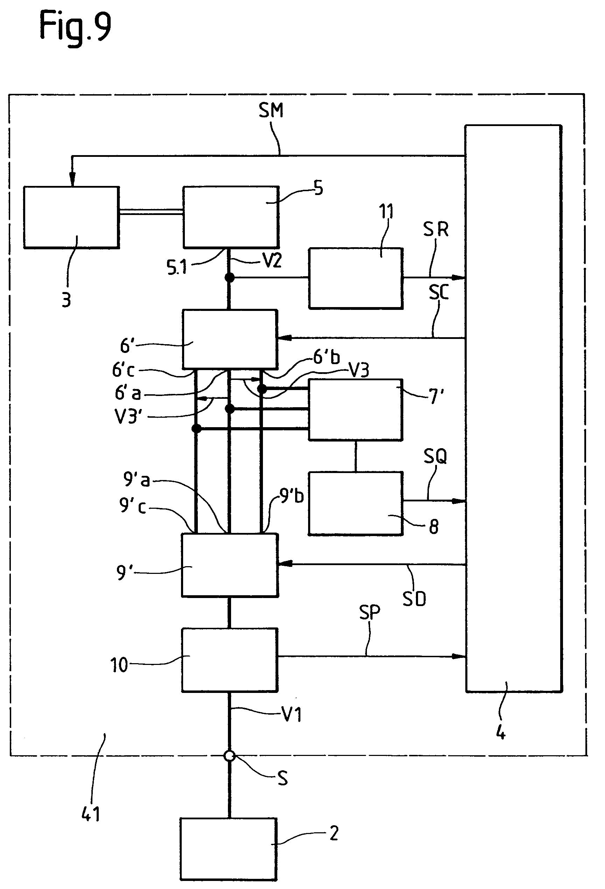

Dans sa forme d'exécution représentée schématiquement à la figure 9, le groupe électrogène selon la présente invention, désigné par la référence 41, est destiné à alimenter un dispositif consommateur 2 et comporte un moteur 3, un circuit de commande 4, un générateur 5 et des circuits de mesure 10 et 11. Ces divers éléments sont semblables aux éléments désignés par les mêmes références dans la figure 1 et ne seront donc pas décrits à nouveau.

La tension alternative V2 produite par le générateur 5 lorsque son rotor est entraîné par le moteur 3 est appliquée à l'entrée d'un convertisseur 6' qui comporte trois bornes de sortie 6'a, 6'b et 6'c.

Le convertisseur 6' est agencé de manière à produire entre ses bornes 6'a et 6'b une tension continue V3 semblable à la tension V3 produite par le convertisseur 6 du groupe électrogène 1. Le convertisseur 6' est en outre agencé de manière à produire entre ses bornes 6'a et 6'c une deuxième tension continue, désignée par V3', ayant la même valeur U3 que la tension V3 mais un signe opposé, ce par quoi il faut entendre que si la borne 6'b est positive, par exemple, par rapport à la borne 6'a, la borne 6'c est négative par rapport à cette même borne 6'a. De plus, et comme le convertisseur 6 du groupe électrogène 1, le convertisseur 6' est agencé de manière que la valeur U3 des tensions V3 et V3' soit sensiblement constante quelle que soit la valeur efficace de la tension V2, et de manière à régler la puissance électrique qu'il fournit aux éléments qui lui sont raccordés en fonction de la valeur d'un signal de réglage, également désigné par SC.

Le convertisseur 6' ne sera pas décrit plus en détail car il s'agit également d'un circuit bien connu des spécialistes.

Le groupe électrogène 41 comporte aussi une source d'énergie électrique rechargeable, désignée par 7', ayant trois bornes de sortie 7'a, 7'b et 7'c reliées respectivement aux bornes 6'a, 6'b et 6'c du convertisseur 6. La source 7' est agencée de manière à produire entre ses bornes 7'a et 7'b une première tension ayant sensiblement la même valeur U3 et la même polarité que la tension V3, et à produire entre cette même borne 7'a et sa borne 7'c une deuxième tension ayant la même valeur U3 et la même polarité que la tension V3'.

Une telle source 7' peut par exemple être constituée par une batterie d'accumulateurs classiques ayant deux bornes extrêmes constituant respectivement les bornes 7'b et 7'c et une borne intermédiaire constituant la borne 7'a.

Le groupe électrogène 41 comporte encore un circuit de surveillance, également désigné par la référence 8, relié à la source 7' pour fournir un signal, également appelé SQ représentatif de la quantité d'énergie électrique contenue dans cette source 7'. Ce circuit de surveillance est identique au circuit 8 du groupe électrogène 1 et ne sera donc pas décrit à nouveau.

Les bornes de sortie 6'a, 6'b et 6'c du convertisseur 6' sont respectivement reliées aux entrées 9'a, 9'b et 9'c d'un deuxième convertisseur 9', qui est agencé de manière à produire la tension alternative de sortie du groupe électrogène 31, également désignée par V1, en réponse aux deux tensions continues V3 et V3'.

Comme le convertisseur 9 du groupe électrogène 1, le convertisseur 9' est un circuit du même genre que les circuits couramment appelés onduleurs et il ne sera donc pas non plus décrit ici. On mentionnera simplement que, comme le convertisseur 9 du groupe électrogène 1, le convertisseur 9' comporte des éléments électroniques tels que des transistors ou des thyristors. En outre, ces éléments électroniques du convertisseur 9' sont commandés par des signaux du même genre que les signaux de commande des éléments électroniques du convertisseur 9 et désignés, ensemble, par la même référence SD que ces derniers.

Il faut cependant noter que, grâce au fait que le convertisseur 9' reçoit deux tensions de signes opposés V3 et V3', il peut comporter deux fois moins d'éléments électroniques que le convertisseur 9. Ceci représente un net avantage du groupe électrogène 41 par rapport au groupe électrogène 1, car de tels éléments électroniques, qui doivent supporter des tensions et des courants élevés, sont des éléments chers.

Le fonctionnement du groupe électrogène 41 ne sera pas décrit car il est identique à celui du groupe électrogène 1 de la figure 1.

Il est évident que les convertisseurs 6a à 6c, les sources 7a à 7c et les convertisseurs 9a à 9c d'un groupe électrogène tel que le groupe électrogène 21 de la figure 5 peuvent également être respectivement semblables au convertisseur 6', à la source 7' et au convertisseur 9' qui viennent d'être décrits, avec le même avantage.

Comme cela a déjà été mentionné, la source d'énergie électrique rechargeable 7 du groupe électrogène 1 peut être constituée par une batterie d'accumulateurs classiques, au plomb ou au cadmium-nickel par exemple.

Mais on sait que la valeur de crête de la tension alternative fournie par un convertisseur tel que le convertisseur 9 est au maximum égale à la valeur de la tension continue appliquée à ce convertisseur.

Ainsi, par exemple, si la tension V1 produite par le groupe électrogène 1 doit avoir une valeur efficace de 220V, il faut que la valeur U3 de la tension continue V3 soit au moins égale à √2 . 220 Volts, soit environ 312 Volts.

Or, pour fournir une telle tension, une batterie d'accumulateurs classiques au plomb, par exemple, doit comporter au moins 142 éléments puisque chacun de ceux-ci délivre une tension de l'ordre de 2,2 Volts. Une telle batterie d'accumulateurs est donc chère et encombrante.

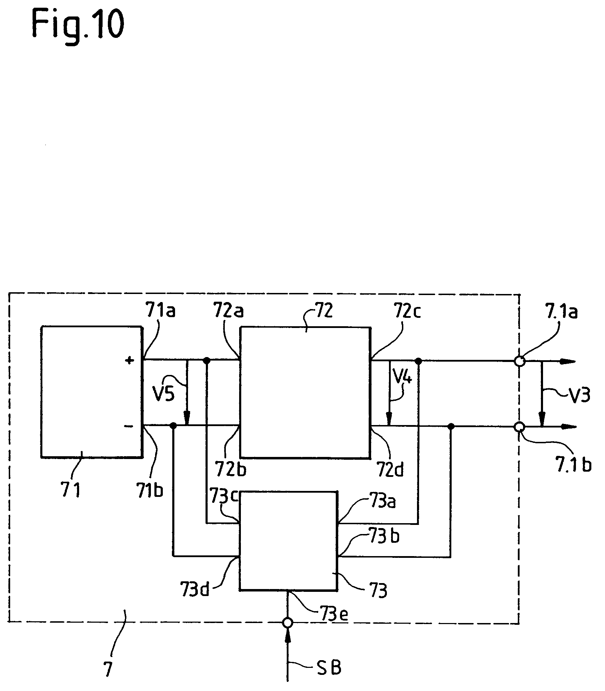

La figure 10 illustre un exemple d'un dispositif qui peut être avantageusement utilisé pour réaliser la source 7 du groupe électrogène 1 car il est beaucoup moins cher et encombrant qu'une batterie d'accumulateurs classiques.

La source d'énergie électrique représentée schématiquement et à titre d'exemple non limitatif à la figure 10, dans laquelle elle est également désignée par la référence 7, comporte une batterie d'accumulateurs 71 délivrant entre sa borne positive 71a et sa borne négative 71b une tension continue V5 ayant une valeur U5 nettement plus faible que la valeur U3 de la tension V3. Cette valeur U5 de la tension V5 peut être, par exemple, de 12V ou de 24V.

Cette source 7 comporte également un élévateur de tension 72 dont les bornes d'entrée 72a et 72b sont respectivement reliées aux bornes 71a et 71b de la batterie d'accumulateurs 71.

L'élévateur de tension 72 comporte également deux bornes de sortie 72c et 72d qui sont reliées aux bornes 7.1a et 7.1b de la source 7, qui sont les bornes désignées, ensemble, par la référence 7.1 dans la figure 1.

L'élévateur de tension 72 ne sera pas décrit en détail car il s'agit d'un circuit bien connu des spécialistes. On mentionnera simplement qu'il est agencé de manière à produire entre ses bornes 72c et 72d, à partir de la tension V5, une tension continue ayant une valeur au moins sensiblement égale à la valeur de la tension V3 lorsque ces bornes 72c et 72d ne sont reliées à aucun autre élément. Cette tension continue, qui est celle qui a été désignée par la référence V4 dans la figure 1, est bien entendu strictement égale à la tension V3 lorsque les bornes 72c et 72d sont reliées aux bornes de sortie du convertisseur 6 par l'intermédiaire des bornes 7.1a et 7.1b de la source 7.

Les flèches qui s'étendent depuis les bornes 7.1a et 7.1b dans la figure 10 symbolisent les liaisons de la source 7 avec les convertisseurs 6 et 9 de la figure 1.

La source 7 de la figure 10 comporte encore un chargeur de batterie 73 dont les entrées 73a et 73b sont respectivement reliées aux sorties 72c et 72d de l'élévateur de tension 72 et dont les sorties 73c et 73d sont respectivement reliées aux bornes 71a et 71b de la batterie d'accumulateurs 71.

Le chargeur de batterie 73 ne sera pas non plus décrit en détail car il s'agit d'un dispositif bien connu. On mentionnera simplement que ce chargeur de batterie 73 est agencé de manière à pouvoir fournir à la batterie d'accumulateurs 71 le courant nécessaire à sa recharge, sous une tension évidemment égale à la tension V5. Pour une raison qui sera rendue évidente plus loin, le chargeur de batterie 73 est en outre agencé de manière à fournir le courant nécessaire à la recharge de la batterie d'accumulateurs 71 ou à interrompre ce courant selon qu'un signal SB qu'il reçoit sur une entrée de commande 73e est dans un premier ou un deuxième état.

On a vu ci-dessus que la source 7 fournit au dispositif consommateur 2 la puissance électrique que celui-ci ne reçoit plus lorsque le convertisseur 6 est bloqué, totalement ou partiellement, c'est-à-dire après toute augmentation de la puissance électrique Pe et jusqu'à ce que la vitesse de rotation R du moteur 7 ait atteint sa nouvelle valeur.

On a également vu que, après que la vitesse de rotation R du moteur 3 a atteint cette nouvelle valeur, la source 7 est rechargée jusqu'à ce que le signal SQ représentatif de la quantité d'énergie électrique qu'elle contient atteigne sa valeur maximale SQ1.

Lorsque la source 7 est constituée de la manière représentée à la figure 10, le circuit de commande 4 est agencé de manière à fournir au chargeur de batterie 73 le signal SB mentionné ci-dessus et à donner à ce signal SB son premier état lorsque la source 7 doit être rechargée, c'est-à-dire dans les circonstances qui viennent d'être décrites, et son deuxième état le reste du temps.

On voit facilement que lorsque la puissance électrique Pe absorbée par le dispositif consommateur 2 augmente et que le convertisseur 6 est totalement ou partiellement bloqué comme cela a été décrit ci-dessus, la différence entre cette puissance électrique Pe et celle qui est encore fournie par ce convertisseur 6 est fournie par la batterie d'accumulateurs 71 sous la tension V5 et transmise au convertisseur 9, sous la tension V3, par l'élévateur de tension 72.

Le signal SB est alors dans son deuxième état, de sorte que le chargeur 73 ne fournit aucun courant à la batterie d'accumulateur 71.

Lorsque la vitesse de rotation R du moteur 3 a atteint sa nouvelle valeur et que le convertisseur 6 recommence à fournir toute la puissance électrique produite par le générateur 5, le circuit de commande 4 donne au signal SB son premier état, de sorte que le chargeur 73 commence à recharger la batterie d'accumulateurs 71, la puissance électrique nécessaire à cette recharge étant bien entendu fournie, sous forme mécanique, par le moteur 3 qui fournit alors sa puissance mécanique maximale comme cela a été décrit ci-dessus.

Lorsque le signal SQ produit par le circuit de surveillance 8, non représenté dans la figure 10, atteint sa valeur maximale SQ1 indiquant par là que la batterie d'accumulateurs 71 est complètement rechargée, le circuit de commande 4 redonne au signal SB son deuxième état, ce qui interrompt la recharge de cette batterie d'accumulateurs 71, en même temps qu'il donne au signal SM sa valeur SM2 comme cela a également été décrit ci-dessus.

En ce qui concerne la source 7, le processus décrit ci-dessus se répète évidemment après chaque augmentation de la puissance électrique Pe absorbée par le dispositif consommateur 2.

On voit qu'une source d'énergie électrique rechargeable telle que celle de la figure 10 utilise une batterie d'accumulateurs n'ayant qu'un nombre réduit d'éléments pour produire la tension relativement élevée V3 nécessaire au fonctionnement du groupe électrogène 1. Il en résulte qu'une telle source est nettement moins encombrante et moins chère qu'un dispositif équivalent constitué uniquement par une batterie d'accumulateurs produisant directement la tension V3, et ceci même en tenant compte de l'encombrement et du prix de l'élévateur de tension 72 et du chargeur 73.

Il est évident qu'une source d'énergie électrique rechargeable telle que celle de la figure 10 peut être utilisée dans toutes les formes d'exécution du groupe électrogène selon la présente invention, et notamment pour constituer chacune des sources 7a, 7b et 7c du groupe électrogène 21 de la figure 5.

De nombreuses modifications peuvent être apportées au groupe électrogène selon la présente invention sans que ce groupe électrogène sorte du cadre de cette invention.

Ainsi, par exemple, le moteur 3, dont on rappellera qu'il est constitué, dans les exemples décrits, par un moteur à explosion alimenté par un carburateur, peut être remplacé par n'importe quel type de moteur à combustible, à condition bien entendu que la puissance mécanique fournie par ce moteur puisse être réglée en fonction de la valeur d'un signal semblable au signal SM décrit ci-dessus. Un tel moteur peut être, par exemple, un moteur également à explosion mais alimenté par un système d'injection, ou un moteur Diesel, ou une turbine à gaz, etc.

Le moteur 3 peut également être constitué, toujours par exemple, par une turbine à vapeur ou à eau.

Parmi les modifications qui peuvent être apportées au groupe électrogène selon l'invention, on peut encore mentionner celle qui consiste à remplacer le circuit de mesure 11 par un dispositif comportant un disque fixé concentriquement à l'arbre reliant le moteur 3 au générateur 5 ou 25, un capteur photo-électrique ou magnétique produisant des impulsions en réponse au passage, devant lui, de dents ou de trous disposés régulièrement à la périphérie de ce disque, et un circuit électronique fournissant le signal SR en réponse à ces impulsions.

De même, un groupe électrogène tel que celui qui a été décrit à l'aide de la figure 1 peut être modifié en remplaçant le générateur 5 par un générateur d'un type, également bien connu, tel que la tension V2 soit une tension continue, et non plus une tension alternative. Dans un tel cas, le convertisseur 6 doit évidemment être agencé de manière à produire la tension continue constante V3 quelle que soit la valeur de cette tension V2. En outre, le circuit de mesure 11 produisant le signal SR représentatif de la vitesse de rotation R du moteur 3 doit être adapté en conséquence, par exemple en le réalisant de la manière qui vient d'être mentionnée, c'est-à-dire à l'aide d'un disque fixé à l'arbre reliant le moteur 3 au générateur 5, d'un capteur et d'un circuit électronique adéquat.

Un groupe électrogène tel que celui qui a été décrit à l'aide de la figure 9 peut évidemment être modifié de la même manière.

Un groupe électrogène tel que celui qui a été décrit à l'aide de la figure 1 peut également être modifié en lui ajoutant un ou plusieurs convertisseurs semblables au convertisseur 9, et en reliant les entrées de ce ou de ces convertisseurs supplémentaires aux sorties du convertisseur 6 et de la source 7, le circuit de commande 4 de ce groupe électrogène étant bien entendu agencé de manière à fournir les signaux de commande, semblables au signal SD, nécessaires au fonctionnement de ces convertisseurs supplémentaires. Un groupe électrogène ainsi modifié peut donc alimenter un ou plusieurs dispositifs consommateurs, comme le groupe électrogène 21 de la figure 5, tout en étant plus simple que ce dernier.

Il est également possible de réaliser chacune des sources d'énergie électrique rechargeables 7 (figure 1), 7a à 7c (figure 5) ou 7' (figure 9) sous la forme d'un ensemble de condensateurs, par exemple de condensateurs électrolytiques.

Mais il est bien connu que, contrairement à un accumulateur, un condensateur ne restitue l'énergie électrique qu'il contient que si la tension à ses bornes peut diminuer.

Par conséquent, lorsque les sources 7, 7a à 7c ou 7' sont constituées de condensateurs, il est nécessaire d'agencer les convertisseurs respectifs 6 (figure 1), 6a à 6c (figure 5) ou 6' (figure 9) de manière que les tensions V3, V3a à V3c ou V3' qu'ils fournissent diminuent pendant le temps où ils sont bloqués après une augmentation de la puissance électrique Pe.

## Revendications

1. Groupe électrogène (1; 21; 41) destiné à fournir une énergie électrique sous une première tension (V1; V1a, V1b, V1c), qui est une tension alternative ayant une valeur efficace et une fréquence déterminées, comportant un moteur (3) et un générateur (5; 25) couplé mécaniquement audit moteur (3) pour produire ladite énergie électrique, caractérisé par le fait que ledit générateur (5; 25) est agencé de manière à produire ladite énergie électrique sous une deuxième tension (V2; V2a, V2b, V2c), et que ledit groupe électrogène (1; 21; 41) comporte un premier convertisseur (6; 6a, 6b, 6c; 6') couplé électriquement audit générateur (5; 25) pour convertir ladite deuxième tension (V2; V2a, V2b, V2c) en une troisième tension (V3; V3a, V3b, V3c; V3, V3'), qui est une tension continue ayant une valeur (U3) constante, une source d'énergie électrique rechargeable (7; 7a, 7b, 7c; 7') couplée en parallèle avec ledit premier convertisseur (6; 6a, 6b, 6c; 6'), et un deuxième convertisseur (9; 9a, 9b, 9c; 9') couplé électriquement audit premier convertisseur (6; 6a, 6b, 6c; 6') et à ladite source d'énergie électrique rechargeable (7; 7a, 7b, 7c; 7') pour produire ladite première tension (V1; V1a, V1b, V1c) à partir de ladite troisième tension (V3; V3a, V3b, V3c; V3, V3').

2. Groupe électrogène (1; 21; 41) selon la revendication 1, caractérisé par le fait qu'il comporte en outre des moyens de réglage de la vitesse de rotation (R) dudit moteur (3) en fonction de la puissance électrique (Pe) fournie par ledit groupe électrogène (1; 21; 41).

3. Groupe électrogène (1; 21; 41) selon la revendication 2, caractérisé par le fait que lesdits moyens de réglage sont agencés de manière que, pour chaque valeur particulière (Pe1, Pe2, Pe3) de ladite puissance électrique (Pe), ledit moteur (3) tourne à la vitesse de rotation particulière (R1, R2, R3) à laquelle il fournit une puissance mécanique (Pm) dont la valeur est égale, d'une part, à ladite valeur particulière (Pe1, Pe2, Pe3) de ladite puissance électrique (Pe) et, d'autre part, à une fraction déterminée de la valeur (Pm1', Pm2', Pm3') de la puissance mécanique maximale qu'il peut fournir à cette vitesse de rotation particulière (R1, R2, R3).

4. Groupe électrogène (21) selon la revendication 1, caractérisé par le fait qu'il est destiné à fournir ladite énergie électrique sous une pluralité de premières tensions alternatives (V1a, V1b, V1c) ayant chacune une valeur efficace et une fréquence déterminées, par le fait que ledit générateur (25) comporte une pluralité d'enroulements (25a, 25b, 25c) pour produire ladite énergie électrique sous une pluralité de deuxièmes tensions alternatives (V2a, V2b, V2c) produites chacune par l'un desdits enroulements (25a, 25b, 25c), et par le fait que ledit groupe électrogène (21) comporte une pluralité de premiers convertisseurs (6a, 6b, 6c) couplés électriquement chacun à l'un desdits enroulements (25a, 25b, 25c) pour convertir une desdites deuxièmes tensions alternatives (V2a, V2b, V2c) en une tension continue (V3a, V3b, V3c), une pluralité de sources d'énergie électrique rechargeables (7a, 7b, 7c) couplées, chacune, en parallèle avec un desdits premiers convertisseurs (6a, 6b, 6c), et une pluralité de deuxièmes convertisseurs (9a, 9b, 9c) couplés électriquement, chacun, à l'un desdits premiers convertisseurs (6a, 6b, 6c) et à l'une desdites sources d'énergie électrique rechargeables (7a, 7b, 7c) pour produire une desdites premières tensions alternatives (V1a, V1b, V1c) à partir de l'une desdites tensions continues (V3a, V3b, V3c).

5. Groupe électrogène selon la revendication 1, caractérisé par le fait qu'il est destiné à fournir ladite énergie électrique sous une pluralité de premières tensions alternatives (V1a, V1b, V1c) ayant chacune une valeur efficace et une fréquence déterminées, et par le fait qu'il comporte une pluralité de deuxièmes convertisseurs (9a, 9b, 9c) couplés électriquement audit premier convertisseur (6) et à ladite source d'énergie électrique rechargeable (7) pour produire, chacun, une desdites premières tensions alternatives (V1a, V1b, V1c) à partir de ladite troisième tension (V3).

6. Groupe électrogène (1; 21; 41) selon la revendication 1, caractérisé par le fait que ladite source d'énergie électrique rechargeable (7; 7a, 7b, 7c) comporte une batterie d'accumulateurs (71) pour produire une quatrième tension (V5), qui est une tension continue ayant une valeur inférieure à la valeur de ladite troisième tension (V3), un élévateur de tension (72) couplé à ladite batterie d'accumulateurs (71) pour produire, à partir de ladite quatrième tension (V5), une cinquième tension (V4), qui est une tension continue ayant une valeur au moins sensiblement égale à la valeur de ladite troisième tension (V3), et un chargeur de batterie (73) couplé audit élévateur de tension (72) et à ladite batterie d'accumulateurs (71) pour recharger ladite batterie d'accumulateurs (71) à partir de ladite troisième tension (V3).
